# EUROPEAN PATENT APPLICATION

(11) **EP 3 417 687 A1**
(43) Date of publication of application: **26.12.2018**
(21) Application number: 18178673.2
(22) Date of filing: 20.06.2018
(51) Int. Cl.: A01B 71/02

(54) **WORKING MACHINE**

(30) Priority: 20.06.2017 JP 2017120644; 20.06.2017 JP 2017120645
(71) Applicant: Kubota Deutschland GmbH, 63110 Rodgau/Nieder-Roden (DE); KUBOTA CORPORATION, Osaka-shi, Osaka 556-8601 (JP)
(72) Inventor: Kaczmarczyk, Andreas, 63110 Rodgau/Nieder-Roden (DE); Ditsche, Burkharn, 63110 Rodgau/Nieder-Roden (DE); Eichberg, Tobias, 63110 Rodgau/Nieder-Roden (DE); Umemoto, Susumu, Sakai-shi, Osaka 590-0823 (JP); Uoya, Yasuhisa, Sakai-shi, Osaka 590-0823 (JP)
(74) Representative: Lemcke, Brommer & Partner Patentanwälte Partnerschaft mbB

(57) **Abstract**

A working machine includes a vehicle body configured to be coupled to a working device, a prime mover disposed on the vehicle body and configured to change a maximum output, and a control device configured to control the prime mover, the control device having a change obtaining part configured to obtain a change command to change the maximum output of the prime mover. The control device is configured to change the maximum output when the change obtaining part obtains the change command.

## Description

### BACKGROUND OF THE INVENTION

### Field of the Invention

The present invention relates to a working machine having a prime mover, for example.

### Discussion of the background

A technique disclosed in Japanese Patent No. 3295411 is conventionally known as a tractor provided with an engine. The tractor disclosed in Japanese Patent No. 3295411 has an automatic plowing depth control mode for controlling a cultivation depth and a draft control mode for moving a working device upward and downward. In the automatic plowing depth control mode, the maximum torque of the engine is set to a high-speed side with respect to the engine revolutions speed, and on the other hand, in the draft control mode, the maximum torque is set to a low-speed side with respect to the engine revolutions speed.

A technique disclosed in Japanese Patent No. 5451657 is conventionally known as a tractor configured to display the statuses of an engine. The tractor disclosed in Japanese Patent No. 5451657 includes an engine control unit configured to control the engine revolutions speed on the basis of the engine revolutions speed and a displaying part configured to display the engine revolutions speed.

### SUMMARY OF THE INVENTION

### Problems to be solved by the invention

In the tractor disclosed in Japanese Patent No. 3295411, the maximum torque of the engine in each of the engine revolutions speeds is changed in both of the automatic plowing depth control mode and the draft control mode, and thereby the working is smoothly performed. However, it is true that a driving force corresponding to the working is hard to be generated by a method other than the method for changing the maximum torque with respect to the engine revolutions speed, and it is still difficult to perform the working in response to various situations more.

In view of the above problems, the present invention intends to provide a working machine configured to perform the working in response to various situations .

In the tractor disclosed in Japanese Patent No. 5451657, an operator or the like who operates the tractor watched the engine revolutions speed displayed on the displaying part, and thereby the operator can operate the tractor, checking the status of the engine revolutions speed of the tractor. However, in the tractor of Japanese Patent No. 5451657, it is true that the operator knows the state of the engine by relying only on the engine revolutions speed.

In view of the above problems, the present invention intends to provide a working machine configured to know the status of a prime mover in more detail.

### Means to solve the problems

To solve the above mentioned problems of the conventional technique, the present invention employs the technical features as follows.

A working machine includes a vehicle body configured to be coupled to a working device, and a prime mover disposed on the vehicle body and configured to change a maximum output.

The working machine includes a control device configured to control the prime mover, the control device having a change obtaining part configured to obtain a change command to change the maximum output of the prime mover. The control device is configured to change the maximum output when the change obtaining part obtains the change command.

The control device includes a storage part configured to store, a standard control map representing a relation between a revolution speed of the prime mover and an output of the prime mover, and a change control map other than the standard control map, the change control map representing a relation between the revolution speed of the prime mover and the output of the prime mover, a standard control part configured to control the prime mover based on the standard control map when the change obtaining part does not obtain the change command, and a change control part configured to control the prime mover based on the change control map when the change obtaining part obtains the change command.

The control device includes a storage part configured to store a standard control map representing a relation between a revolution speed of the prime mover and an output of the prime mover, a control map creation part configured to change the standard control map stored in the storage part and to create a change control map, a standard control part configured to control the prime mover based on the standard control map when the change obtaining part does not obtain the change command, and a change control part configured to control the prime mover based on the change control map when the change obtaining part obtains the change command.

The working machine includes a position detecting device configured to detect a machine position that is a position of either one of the vehicle body and the working device. The prime mover is configured to change the maximum output based on the machine position detected by the position detecting device.

The working machine includes a time counting part configured to count time. The prime mover configured to change the maximum output based on the time counted by the time counting part.

The prime mover is configured to change the maximum output based on the working device coupled to the vehicle body.

The working machine includes an operator seat, and a change-operation member disposed forward from or lateral to the operator seat and configured to change the change command when being operated. The prime mover is configured to change the maximum output when the change-operation member is operated.

The working machine includes a position detecting device configured to detect a machine position that is a position of either one of the vehicle body and the working device, a change-position obtaining part configured to obtain an output-change position that is a position where the maximum output is changed, and a change-position setting part configured to output the change command to the change obtaining part when the machine position is matched with the output-change position obtaining by the change-position obtaining part.

The working machine includes a display device configured to set the output-change position.

The working machine includes a time counting part configured to count time, a change-time obtaining part configured to obtain an output-change time that is time when the maximum output is changed, and a change-time setting part configured to output the change command to the change obtaining part when the time counted by the time-counting part is matched with the output-change time obtaining by the change-time obtaining part.

The working machine includes a display device configured to set the output-change time that is time when the maximum output is changed.

The working machine includes a change-device obtaining part configured to obtain device information of the working device whose maximum output is changed, and a change device setting part configured to output the change command to the change obtaining part when the device information obtained by the change-device obtaining part represents the working device coupled to the vehicle body.

The working machine includes a display device configured to set the device information of the working device whose maximum output is changed.

The change obtaining part obtains the change command from an external device.

The working machine includes a change-time calculating part configured to calculate an elapsed time counted from the changing of the maximum output of the prime mover.

A working machine includes a vehicle body configured to be coupled to a working device, a prime mover disposed on the vehicle body, and a display device configured to display an output of the prime mover.

The prime mover is configured to change the output. The display device is configured to display the output before changed and the output after changed.

The prime mover is configured to change a maximum output. The display device is configured to display the maximum output after changed.

The display device is configured to display the maximum output before changed and the maximum output after changed.

The working machine includes an operator seat disposed on the vehicle body, and a change-operation member disposed forward from or lateral to the operator seat and configured to issue a command to change the output.

The display device is configured to display, after the change-operation member is operated, whether the output is allowed to be changed.

The display device is configured to display guide of a condition to change the output, when the output is not allowed to be changed.

The display device is configured to display a cost generated by the change of the output.

The working machine includes an operator seat disposed on the vehicle body. The display device is disposed forward from or lateral to the operator seat.

The working machine includes a confirmation member configured to confirm that the cost for the change of the output is generated.

The change-operation member is configured to serve as the confirmation member.

### Effects of the invention

According to the present invention, since the maximum output of the prime mover can be changed, for example, the maximum output of the prime mover can be increased to perform the working with a greater driving force, and then the maximum output of the prime mover can be decreased to perform the working with a small driving force. That is, it is possible to perform the working in response to various situations.

According to the present invention, since the output of the prime mover can be displayed, the operator or the like who operates the working machine can know the status of the prime mover more.

### DESCRIPTION OF THE DRAWINGS

A more complete appreciation of the invention and many of the attendant advantages thereof will be readily obtained as the same becomes better understood by reference to the following detailed description when considered in connection with the accompanying drawings.
FIG. 1 is a view illustrating a control block diagram of a working machine according to a first embodiment of the present invention.
FIG. 2A is a view illustrating a relation between an agricultural field and the maximum output according to the first embodiment.
FIG. 2B is a view illustrating a relation between time and the maximum output according to the first embodiment.
FIG. 2C is a view illustrating a relation between a working device and the maximum output according to the first embodiment.
FIG. 3A is a view illustrating a standard control map according to the first embodiment.
FIG. 3B is a view illustrating a change control map according to the first embodiment.
FIG. 4A is a view illustrating a setting screen M1 according to the first embodiment.
FIG. 4B is a view illustrating a setting screen M2 according to the first embodiment..
FIG. 4C is a view illustrating a setting screen M3 according to the first embodiment.
FIG. 5A is a view illustrating a driving screen M4 according to the first embodiment.
FIG. 5B is a view illustrating another driving screen M4 according to the first embodiment.
FIG. 5C is a view illustrating further another driving screen M4 according to the first embodiment.
FIG. 5D is a view illustrating further another driving screen M4 according to the first embodiment.
FIG. 6 is a view illustrating a meter panel according to the first embodiment.
FIG. 7 is a view illustrating a confirmation screen M5 according to the first embodiment.
FIG. 8 is a view illustrating a control block diagram of the working machine provided with a communication device according to the first embodiment.
FIG. 9 is a view illustrating a relation between identification information of a tractor and identification information of a user according to the first embodiment.
FIG. 10 is a view illustrating a control block diagram of a working machine according to a second embodiment of the present invention.
FIG. 11 is a view illustrating a control block diagram of a working machine according to a third embodiment of the present invention.
FIG. 12 is a view illustrating a setting screen M6 according to the third embodiment.
FIG. 13 is a view illustrating a control block diagram of a working machine according to a fourth embodiment of the present invention..
FIG. 14 is a view illustrating a power transmission system of a prime mover and a speed-changing device according to the fourth embodiment.
FIG. 15 is an overall view illustrating the working machine according to the embodiments.

### DESCRIPTION OF THE EMBODIMENTS

The embodiments will now be described with reference to the accompanying drawings, wherein like reference numerals designate corresponding or identical elements throughout the various drawings. The drawings are to be viewed in an orientation in which the reference numerals are viewed correctly.

Referring to drawings, embodiments of the present invention will be described below.

### (First embodiment)

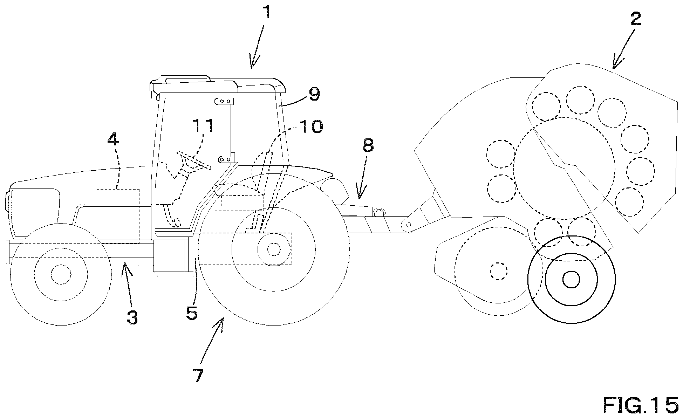

FIG. 15 shows an overall view of a working machine 1. Although the working machine 1 shown in FIG. 15 is a tractor, the working machine 1 is not limited to the tractor, and may be an agricultural machine such as a combine and a rice transplanter or a construction machine and the like.

Firstly, the overall configuration of the tractor 1 will be described below.

As shown in FIG. 15, the tractor 1 includes a vehicle (a vehicle body) 3 having a traveling device 7, and includes a prime mover 4.

The traveling device 7 is a device having a front wheel and a rear wheel. The front wheels and the rear wheels may be a type employing a type or a type employing a crawler. The prime mover 4 is an internal combustion engine, an electric motor, or the like provided in the vehicle body 3. The prime mover 4 may be the internal combustion engine alone or a hybrid type that combines the internal combustion engine and the electric motor.

The internal combustion engine is a diesel engine or a gasoline engine. In the embodiment, the prime mover 4 is the diesel engine.

The vehicle body 3 is configured to be connected to the working device 2. The vehicle body 3 includes a connecting portion 8 constituted of a three-point link mechanism or the like at the front portion or the rear portion. When the working device 2 is connected to the connecting portion 8, the working device 2 can be towed (pulled) by the vehicle body 3.

The working device 2 is a cultivating machine for the cultivation, a fertilizer distributing machine for the fertilizer distribution, an agricultural chemical distributing machine for the agricultural chemicals distribution, a harvesting machine for the harvesting, a mowing machine for the grass mowing and the like, a tedding machine for the pasture tedding and the like, a raking machine for the grass raking and the like, a baling machine for the grass baling and the like, and the like. Meanwhile, FIG. 15 shows an example in which the baling machine is attached as a working device 2.

The tractor 1 is provided with a speed-changing device (a transmission) 5. The speed-changing device 5 is configured to change a propulsive force of the traveling device 7 by the gear shift, and to switch the traveling device 7 between the forward traveling and the backward traveling. In addition, the tractor 1 includes an operator seat 10 disposed on the vehicle body 3 and an steering device 11. The operator seat 10 and the steering device 11 are arranged in a cabin 9 provided in the vehicle body 3. The steering device 11 is constituted of, for example, an steering wheel or the like, and the traveling direction of the tractor 1 can be changed by steering the steering device 11.

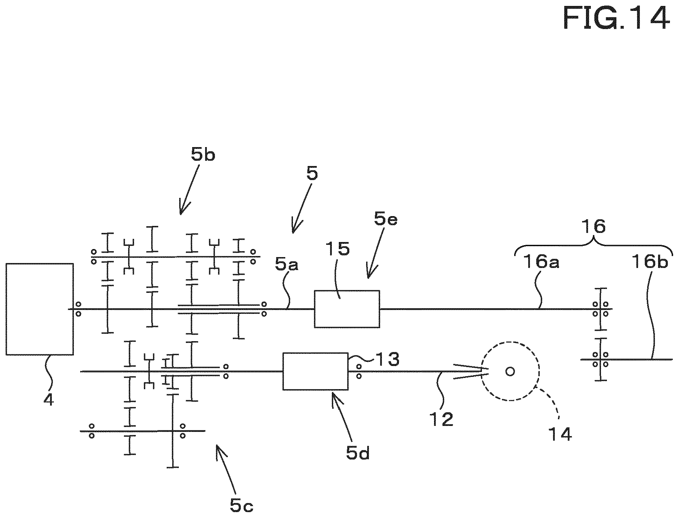

FIG. 14 shows the prime mover 4 and the power transmission system of the speed-changing device 5.

As shown in FIG. 14, the speed-changing device 5 includes a main shaft (a thrusting shaft) 5a, a main speed-changing portion 5b, and a sub speed-changing portion 5c. The thrusting shaft 5a is rotatably supported by a housing case of the speed-changing device 5, and the power from the crankshaft of the prime mover 4 is transmitted to the thrusting shaft 5a. The main speed-changing portion 5b has a plurality of gears and a shifter for changing the engagement of the gears. The main transmission portion 5b arbitrarily changes the connection (the engagement) of the plurality of gears with the shifter, and thereby changing (shifting) the rotations inputted from the thrusting shaft 5a to output the rotations.

Similar to the main transmission portion 5b, the sub transmission portion 5c has a plurality of gears and a shifter for changing the engagement of the gears. The sub transmission portion 5c arbitrarily changes the connection (the engagement) of the plurality of gears with the shifter, and thereby changing (shifting) the rotations inputted from the main transmission portion 5b to output the rotations.

In addition, the speed-changing device 5 is provided with a shuttle portion 5d. The shuttle portion 5d has a shuttle shaft 12 and a forward and backward switching portion 13. The power outputted from the sub transmission portion 5c is transmitted to the shuttle shaft 12 through a gear or the like. The shuttle shaft 12 is provided with a rear wheel differential device 14.

A rear axle supporting a rear wheel is rotatably supported by the rear wheel differential device 14. The forward and backward switching portion 13 is constituted of, for example, a hydraulic clutch, and is configured to switch the rotational direction of the shuttle shaft 12, that is, to switch the forward movement and the backward movement of the tractor 1 by the on-off switching of the hydraulic clutch.

The PTO power transmission part 5e has a PTO clutch 15 and a PTO shaft 16. The PTO shaft 16 is rotatably supported, and is configured to transmit power from the thrusting shaft 5a. The PTO shaft 16 has a PTO thrusting shaft 16a and a PTO output shaft 16b. The PTO thrusting shaft 16a is connected to the PTO output shaft 16b through a gear or the like. The PTO clutch 15 is a clutch configured to be switched between a connected state in which the power of the thrusting shaft 5a is transmitted to the PTO shaft 16 and a disconnected state in which the power of the thrusting shaft 5a is not transmitted to the PTO shaft 16.

In particular, the PTO clutch 15 is provided between the thrusting shaft 5a and the PTO thrusting shaft 16a. The PTO clutch 15 is constituted of a hydraulic clutch, and is configured to transmit the power of the prime mover 4 (the power of the thrusting shaft 5a) to the PTO shaft 16 or not to transmit the power of the thrusting shaft 5a to the PTO shaft 16 by the connecting and disconnecting of the hydraulic clutch.

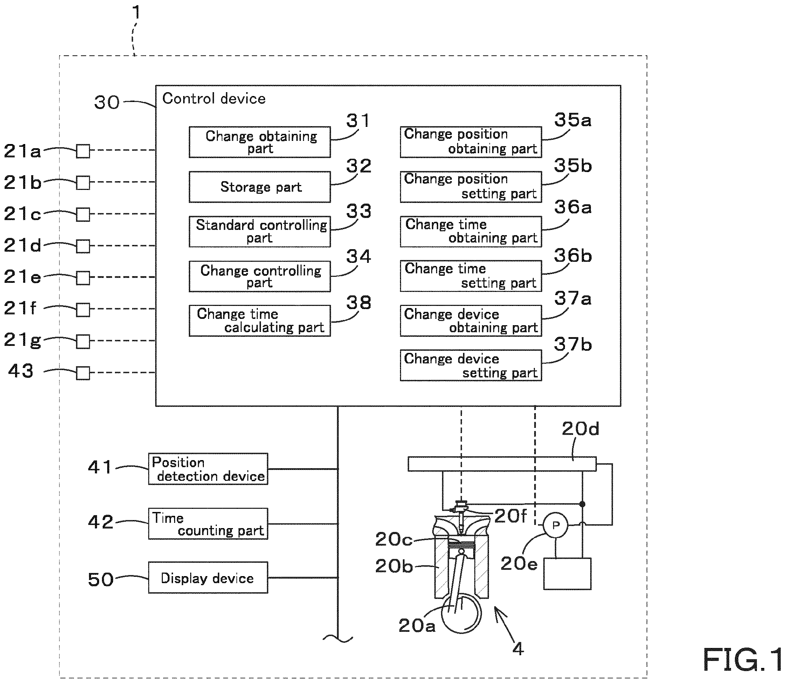

As shown in FIG. 1, the prime mover 4 is a common rail type diesel engine configured to change the maximum output, that is, the maximum horsepower, and includes a crankshaft 20a rotatably supported, a piston 20c moving inside a cylinder 20b, the piston 20c being connected to the crankshaft 20a, a supply puMP20e configured to increase the pressure of fuel and to supply the fuel to the common rail 20 d, an injector 20f configured to inject the high-pressure fuel in the common rail 20d into the cylinder 20b. The configuration of the prime mover 4 is not limited to the above-described configuration.

The maximum output is changed in the case where a position of the tractor 1 or the working device 2 has reached a predetermined position (a first example), in the case where time (a clock time) has reached a predetermined time (a second example), in the case where a predetermined one of the working devices 2 is connected to the tractor 1 (a third example), in the case where there is an instruction from an operator who is operating the tractor 1 (a fourth example), and the like. For example, the prime mover 4 can increase the maximum output of the prime mover 4 to be more than the standard maximum output, and can decrease the maximum output of the prime mover 4 to be less than the standard maximum output.

Next, examples (the first example to the fourth example) in which the maximum output of the prime mover 4 is changed will be described below in turn.

As long as the tractor 1 can carry out any one of the first to fourth examples, it is not necessary for the tractor 1 to be able to carry out all the examples (the first example to the fourth example). In addition, a combination of at least two of the first example to the fourth example may be applied to the tractor 1.

For convenience of the explanation, in the explanations of the first example to the fourth example, it is assumed that the maximum output before the maximum output of the prime mover 4 is changed is set to be the "standard maximum output" and that the maximum output after the maximum output of the prime mover 4 is changed is set to be the "changed maximum output" which is higher than the "standard maximum output". In addition, the numerical values of the standard maximum output (180PS) and the numerical value of the changed maximum output (200PS) are numerical values exemplified for easy understanding, and are not limited to the values.

As shown in FIG. 1, the tractor 1 is provided with a position detecting device 41. The position detecting device 41 is a device attached to the vehicle body 3 or to the working device 2, and is configured to detect a machine position that is the position (the latitude and the longitude) of the vehicle body 3 or the working device 2. The position detecting device 41 receives a signal (the positions of the positioning satellites, a transmission time, a correction information, and the like) transmitted from the positioning satellites, and detects the machine position on the basis of the signal already received. The prime mover 4 changes the maximum output on the basis of the machine position detected by the position detecting device 41.

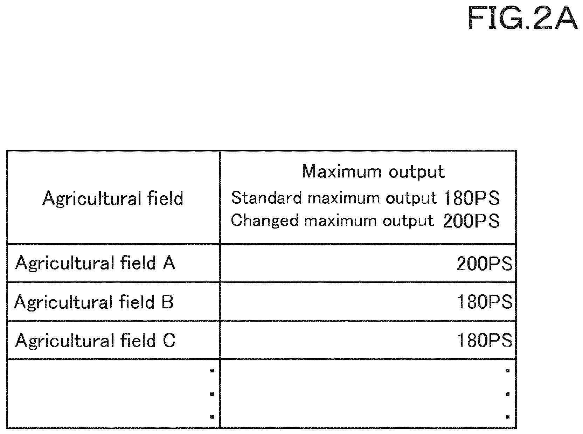

As shown in FIG. 2A, in the case where there are a plurality of agricultural fields, it is assumed that the maximum output of the prime mover 4 in the agricultural field B and the agricultural field C is set to be 180PS which is a standard of the maximum output (the standard maximum output), and it is assumed that the maximum of the prime mover 4 in the field A is set to be 200PS which is the changed maximum output higher than the standard maximum output. Here, when the tractor 1 is working in the field B and in the field C, that is, when the machine position detected by the position detecting device 41 is in the field B and in the field C, the prime mover 4 sets the maximum output to be 180PS of the standard maximum.

In addition, when the tractor 1 moves to the field A and the machine position detected at the position detection position 41 corresponds to the field A, the prime mover 4 changes the maximum output from the standard maximum output to 200 PS of the changed maximum output.

As shown in FIG. 1, the tractor 1 is provided with a time counting part 42 configured to count time. The time counting part 42 is a timer or the like configured to calculate time and the like, and to calculate, for example, years, months, days, and time. The prime mover 4 changes the maximum output on the basis of the time counted by the time counting part 42.

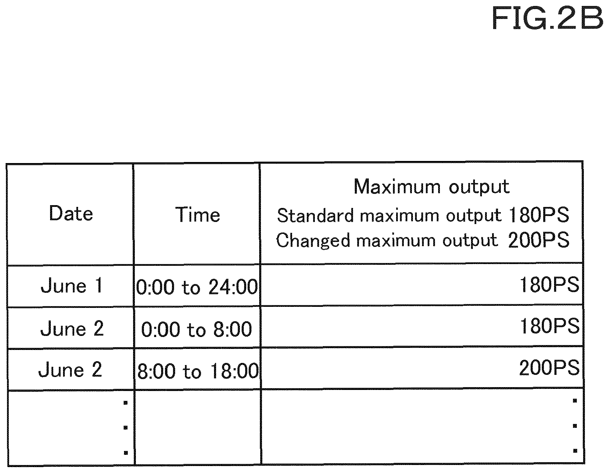

As shown in FIG. 2B, it is assumed that the maximum output of the prime mover 4 at "June 2, 8 o'clock to 18 o'clock" is set as the changed maximum output. Here, when the time detected by the time counting part 42 is not matched with the output change time "June 2, 8 o'clock to 18 o'clock", the prime mover 4 sets the maximum output to be the standard maximum output (180PS) .

When the time detected by the time counting part 42 is matched with the output change time (June 2, 8 o'clock to 18 o'clock), the prime mover 4 changes the maximum output from the standard maximum output to the changed maximum output of 200PS.

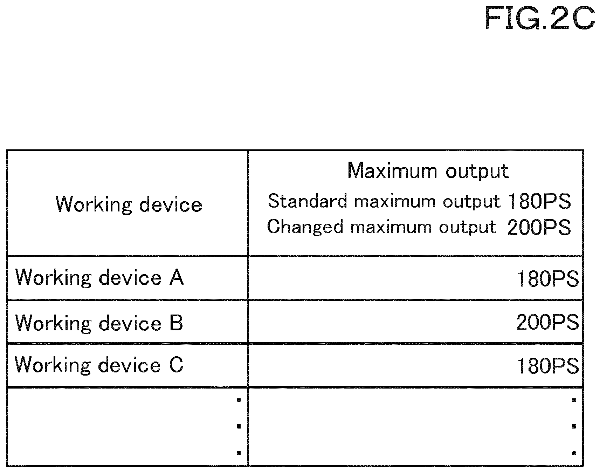

As shown in FIG. 2C, it is assumed that the changed maximum output is set as the maximum output of the prime mover 4 of the case where the working device 2 is the "working device B". Here, in the case where the working devices 2 connected to the connecting portion 8 of the tractor 1 are "the working device A, the working device C" and not "the working device B", the prime mover 4 sets the maximum output to be the standard maximum output.

In addition, in the case where the working device 2 connected to the connecting portion 8 of the tractor 1 is "the working device B", the prime mover 4 changes the maximum output from the standard maximum output to the changed maximum output.

As shown in FIG. 1, the tractor 1 is provided with a change operation member 43. The change operation member 43 is a member configured to set the maximum output of the prime mover 4 by being operated. The change operation member 43 is, for example, a switch configured to be operated by an operator such as a switch configured to be switched between ON and OFF, a slide switch configured to be moved in one direction or the other direction, a rotary switch configured to be rotated in the circumferential direction. The change operation member 43 is provided on the front side or the lateral side of the operator seat 10. The prime mover 4 changes the maximum output when the change operation member 43 is operated.

In the case where the change operation member 43 is a changeover switch and the changeover switch is in the OFF state, the maximum output of the prime mover 4 is set to be the standard maximum output, and when the changeover switch is in the ON state, the maximum output of the prime mover 4 is set to be the changed maximum output. In the case where the changeover switch is in the OFF state, the prime mover 4 maintains the maximum output at the standard maximum output. And, in the case where the changeover switch is in the ON state, the prime mover 4 changes the maximum output from the standard maximum output to the changed maximum output.

Assuming the following conditions, in the case where the change operation member 43 is a slide switch or a rotary switch and in the case where the slide switch or the rotary switch is in the first position, the maximum output of the prime mover 4 is set to the standard maximum output. And, in the case where the slide switch or the rotary switch is in the second position different from the first position, the maximum output of the prime mover 4 is set to the changed maximum output.

In the case where the slide switch or the rotary switch is located at the first position, the prime mover 4 maintains the maximum output at the standard maximum output, and in the case where the slide switch or the rotary switch is switched from the first position to the second position, the maximum output is changed from the standard maximum output to the changed maximum output.

In this manner, the prime mover 4 can change the maximum output on the basis of the position, the time, the working device 2 connected to the connecting portion 8, and the operation by the change operation member 43. In other words, the prime mover 4 can increase and reduce the maximum output itself with respect to the standard maximum output, depending on any of the conditions in the position, in the time, in the operation device 2, and in the operation of the change operation unit 43, regardless of the constraint condition to the control in the tractor 1.

As shown in FIG. 1, the prime mover 4 is controlled by the control device 30 provided in the tractor 1. The control by the control device 30 will be described together with the first example to the fourth example for changing the maximum output.

To the control device 30 is connected to a crank sensor 21a configured to detect a crank position, to a cam sensor 21b configured to detect a cam position, to an engine revolutions sensor 21c configured to detect a revolutions speed (a engine revolutions speed) of the prime mover 4, and to an accelerator sensor 21d configured to detect a set value of the accelerator. The control device 30 transmits a control signal to the injector 20f, the supply puMP20e, and the like, the control signal being obtained based on signals such as the crank position, the cam position, the engine revolutions speed, and the like detected by the crank sensor 21a, the cam sensor 21b, the engine rotation sensor 21, and the like, thereby controlling the prime mover 4.

In the control of the injector, a control signal indicating a fuel injection amount, a injection timing, and a fuel injection rate is output to the injector 20f. In addition, in the control of the supply puMP20e, a signal indicating a fuel injection pressure and the like is outputted to the supply puMP20e.

The control device 30 has a change obtaining part 31. The change obtaining part 31 is constituted of electric/electronic parts provided in the control device 30, programs incorporated in the control device 30 and etc., and the like. The change obtaining part 31 obtains a change command for changing the maximum output of the prime mover 4. The control device 30 changes the maximum output of the prime mover 4 when the change obtaining part 31 obtains the change command.

The control device 30 has a storage part 32, a standard controlling part 33, and a change controlling part 34. The storage part 32 is constituted of a nonvolatile memory or the like. The standard controlling part 33 and the change controlling part 34 are constituted of electric/electronic parts provided in the control device 30, programs incorporated in the control device 30 and the like, and the like.

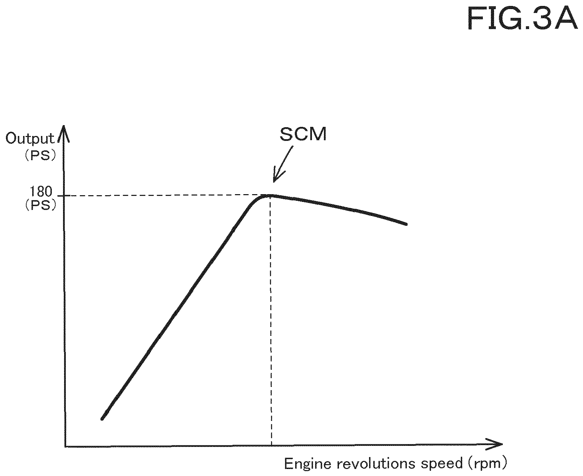

As shown in FIG. 3A, the storage part 32 stores a standard control map SCM showing a relation between the revolutions speed of the prime mover 4 (the engine revolutions speed) and the output. In the standard control map SCM, the relation between the engine revolutions speed and the output is set by a plurality of control parameters such as a fuel injection amount, an injection timing, a fuel injection rate, a fuel injection pressure, and the like, and thus the standard control map SCM is set on the basis of the set values of the control parameters. The standard control map SCM is a map that is employed in a state where the maximum output of the prime mover 4 is not changed. And then, as shown in FIG. 3A, the maximum output of the prime mover 4 is set to 180PS.

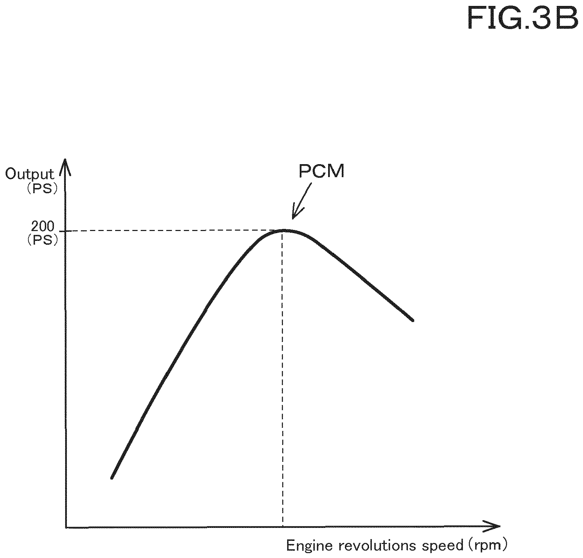

As shown in FIG. 3B, in addition to the standard control map SCM, the storage part 32 stores a change control map PCM indicating the relation between the engine revolutions speed and the output. Also in the change control map PCM, the relation between the engine revolutions speed and the output is set by a plurality of control parameters such as a fuel injection amount, an injection timing, a fuel injection rate, a fuel injection pressure, and the like, and thus the change control map PCM is set on the basis of the set values of the control parameters.

The change control map PCM is a map employed under a state where the maximum output of the prime mover 4 is changed. And, as shown in FIG. 3B, the maximum output of the prime mover 4 is set to 200PS which is higher than the standard control map SCM.

The standard controlling part 33 controls the prime mover 4 on the basis of the standard control map SCM in the case where the change obtaining part 31 has not obtained the change command. That is, under a state where the change obtaining part 31 has not obtained the change command, the standard controlling part 33 refers to the standard control map SCM stored in the storage part 32. And then, the standard controlling part 33 controls the fuel injection amount, the injection timing, the fuel injection rate, the fuel injection pressure and the like such that a relation between the engine revolutions speed detected by the engine revolutions sensor 21c and the output shown in the standard control map SCM are matched with.

In the case where the change obtaining part 31 obtains the change command, the change controlling part 34 controls the prime mover 4 on the basis of the change control map PCM. That is, under a state where the change obtaining part 31 obtains the change command, the change controlling part 34 refers to the change control map PCM stored in the storage part 32. And then, the standard controlling part 33 controls the fuel injection amount, the injection timing, the fuel injection rate, the fuel injection pressure and the like such that a relation between the engine revolutions speed detected by the engine revolutions sensor 21c and the output shown in the change control map PCM are matched with.

Meanwhile, the standard control map SCM and the change control map PCM may be the control maps showing the relation between the engine revolutions speed and the output, the standard control map SCM and the change control map PCM may employ a map in which each of the fuel injection amount, the injection timing, the fuel injection rate, the fuel injection pressure is related to every engine revolutions speed, and further the standard control map SCM and the change control map PCM may employ a map in which an air-intake amount is related to every engine revolutions speed. Thus, the standard control map SCM and the change control map PCM it is not limited to the above examples mentioned above.

According to the above description, the control device 30 has the change obtaining part 31, and changes the maximum output when the change obtaining part 31 obtains the change command. In this manner, the control device 30 is configured to arbitrarily change the maximum output of the prime mover 4 at various timings at which the change obtaining part 31 obtains the change command, and thereby performing the operation by the working device 2 in response to various situations.

In addition, the storage part 32 of the control device 30 stores the standard control map SCM and the change control map PCM. The standard controlling part 33 controls the prime mover 4 on the basis of the standard control map SCM in the case where the change obtaining part 31 has not obtained the change command, and the change controlling part 34 controls the prime mover 4 on the basis of the change control map PCM in the case where the change obtaining part 31 has obtained the change command.

In this manner, the working device 2 can be operated by the driving force of the prime mover 4 under the state where the maximum output of the prime mover 4 is set to the standard maximum output (for example, 180PS) by the standard control portion 33. On the other hand, the working device 2 is operated by the driving force of the prime mover 4 under the state where the maximum output of the prime mover 4 is set to the changed maximum output (for example, 200PS) by the change controlling part 34, the changed maximum output being larger than the standard maximum output. Even with the tractor 1 whose the prime mover 4 provides the standard maximum output of 180PS, the working device 2 is configured to be operated by the driving force of the prime mover 4 temporarily with the increased maximum output of 200PS.

Next, the configuration and operation in which the control device 30 changes the maximum output of the prime mover 4 in accordance with the machine position will be described below in detail.

As shown in FIG. 1, the control device 30 has a change position obtaining part 35a and a change position setting part 35b. The change position obtaining part 35a and the change position setting part 35b are composed of electric/electronic parts provided in the control device 30, programs incorporated in the control device 30 and the like, and the like. The change position obtaining part 35a obtains a position (an output change position) at which the maximum output is changed. For example, the output change position is set by the display device 50 provided in the tractor 1, and the change position obtaining part 35a obtains the output change position set by the display device 50.

The display device 50 is a monitor provided on the front side or the lateral side of the operator seat 10 (in front of the seat portion of the operator seat 10, on the right side of the seat portion or on the left side of the seat portion), and directs a display portion constituted of a liquid crystal panel or the like. The display device 50 displays various types of information relating to the tractor 1 and the like. The display device 50 can operate a screen or the like displayed on the display device 50 by the operation of a switch or the like.

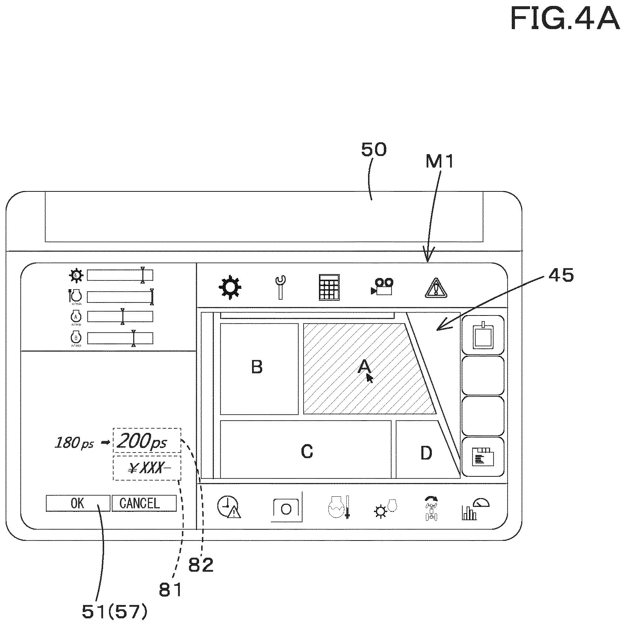

In particular, when a predetermined operation is performed, the display device 50 displays the setting screen M1 as shown in FIG. 4A. An agricultural field map 45 indicating an agricultural field is displayed on the setting screen M1. A position (the latitude and the longitude) is associated with the agricultural field map 45. On the setting screen M1, when the finish button 51 indicated on the setting screen M1 is selected after a predetermined agricultural field (for example, the agricultural field A) is selected in the agricultural field map 45, a position (the latitude and the longitude) corresponding to the agricultural field A (the selected field) selected in the setting screen M1 is set as the output change position. That is, as shown in FIG. 4A, all positions in the selected agricultural field (the agricultural field A) indicated in the agricultural field map 45 are set as the output change positions.

The display device 50 outputs the output change position set on the setting screen M1 to the control device 30. When the output change position outputted by the display device 50 is inputted to the control device 30, the change position obtaining portion 35a of the control device 30 obtains the output change position. The storage part 32 of the control device 30 stores the output change position obtained by the change position obtaining portion 35a.

When the output change position obtained by the change position obtaining portion 35a and the machine position detected by the position detecting device 41 are matched with each other, the change position setting part 35b outputs a change command to the change obtaining part 31 of the control device 30. For example, when the ignition switch of the tractor 1 is set to ON, the change position setting part 35b refers to the output change position stored in the storage part 32. When the machine position detected by the position detecting device 41 after the ignition switch is turned on is not matched with the output change position referred to, the change position setting part 35b does not output the change command to the change obtaining part 31.

In that case, the prime mover 4 is controlled by the standard controlling part 33 on the basis of the standard control map SCM. On the other hand, in the case where the machine position detected by the position detecting device 41 after the ignition switch is turned on is matched with the output change position, that is, in the case where the tractor 1 enters the agricultural field A, the change position setting part 35b outputs the change command to the change obtaining part 31. In that case, the control in the control device 30 is switched from the control by the standard controlling part 33 to the control by the change controlling part 34, and the prime mover 4 is controlled on the basis of the change control map PCM.

According to the first example described above, the tractor 1 is provided with the position detecting device 41 configured to detect the machine position, and the prime mover 4 is configured to change the maximum output in the basis of the machine position detected by the position detecting device 41. The tractor 1 includes the position detecting device 41 and the change position obtaining part 35a. In this manner, depending on the machine position of the tractor 1, the standard maximum output and the changed maximum output can be selectively used as the maximum output of the prime mover 4.

For example, in the case where the workings across the plurality of agricultural fields, the tractor 1 (the working device 2) can perform the working at the standard maximum output in the field B, and the tractor 1 (the working device 2) can perform the working at the changed maximum output higher than the standard maximum output in the field A. In addition, in the case where the tractor 1 runs freely on the roads and the farm roads that are other than the fields, the tractor 1 can run at the standard maximum output.

In addition, the display device 50 provided in the tractor 1 can set the output change position. In this manner, an operator or the like who operates the tractor 1 or the like arbitrarily operates the setting screen M1 and the like while boarding on the tractor 1, and thereby the operator can easily set place(the output change position) where the working is desired to be performed with the maximum output of the prime mover 4 increased to be higher than the standard maximum output, while watching the agricultural field map 45 displayed on the display device 50.

Next, the configuration and the operation for the control device 30 to change the maximum output of the prime mover 4 depending on the time will be described in detail.

The control device 30 includes a change time obtaining part 36a and a change time setting part 36b. The change time obtaining part 36a and the change time setting part 36b are constituted of electric/electronic parts provided in the control device 30, programs incorporated in the control device 30 and the like, and the like. The change time obtaining part 36a obtains the time (the output change time) for changing the maximum output. For example, the output change time is set by the display device 50, and then the change time obtaining part 36a obtains the output change time set by the display device 50.

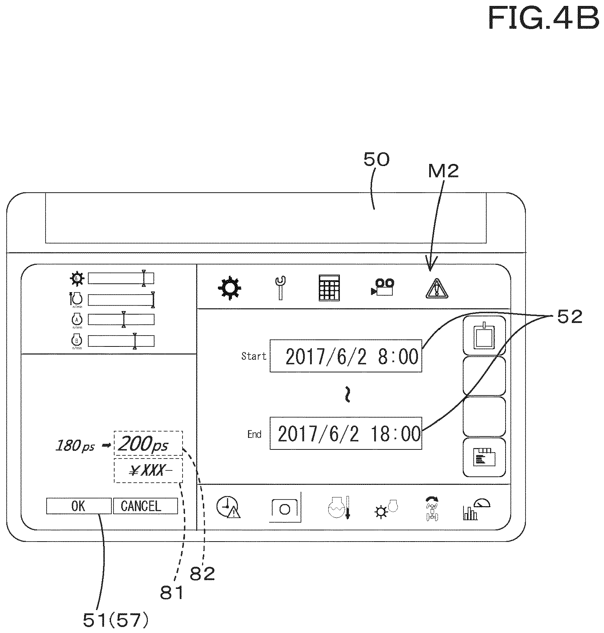

In particular, as shown in FIG. 4B, when a predetermined operation is performed, the display device 50 displays the setting screen M2. A time inputting part 52 configured to input the time is displayed on the setting screen M2. To the time inputting part 52, a start time at which the output changing is started and an end time at which the output changing is finished are inputted. The times (the start time and the end time) to be inputted to the time inputting part 52 is inputted by operation of a setting tool (a first setting tool) such as a switch provided on the display device 50 or a setting tool (a second setting tool) displayed on the setting screen M2. When the finish button 51 indicated on the setting screen M2 is selected, the time inputted to the time inputting part 52 of the setting screen M2 is set as the output change time.

That is, as shown in FIG. 4B, all the times from the start time (8 o'clock on June 2) to the end time (18 o'clock on June 2) each inputted to the time inputting part 52 of the setting screen M2 are set as the output change time. The display device 50 outputs the output change time set on the setting screen M2 to the control device 30. When the output change time outputted by the display device 50 is inputted to the control device 30, the change time obtaining part 36a of the control device 30 obtains the output change time. The storage part 32 of the control device 30 stores the output change time obtained by the change time obtaining part 36a.

When the output change time obtained by the change time obtaining part 36a is matched with the time (the counted time) counted by the time counting part 42, the change time setting part 36b outputs a change command to the change obtaining part 31 of the control device 30. For example, after the ignition switch of the tractor 1 is turned on, the change time setting part 36b refers to the output change time stored in the storage part 32. In the case where the clock time of the time counting part 42 is not matched with the output change time referred to after the ignition switch is turned on, the change time setting part 36b does not output the change instruction to the change obtaining part 31. And thus, the prime mover 4 is controlled by the standard controlling part 33 on the basis of the standard control map SCM.

On the other hand, in the case where the clock time of the time counting part 42 is matched with the output change time after the ignition switch is turned on, that is, in the case where the clock time is from 8 o'clock on June 2 to 18 o'clock on June 2, the change time setting part 36b outputs the change command to the change obtaining part 31. In this manner, in the case where the clock time is from 8 o'clock on June 2 and to 10 o'clock on June 2, the prime mover 4 is controlled on the basis of the change control map PCM.

According to the second example described above, the tractor 1 is provided with the time counting part 42, and the prime mover 4 changes the maximum output on the basis of the time counted by the time counting part 42. The tractor 1 includes a change time obtaining part 36a and a change time setting part 36b. In this manner, on the basis of an arbitrary time of the tractor 1, the standard maximum output and the changed maximum output can be selectively used as the maximum output of the prime mover 4. In the case where the tractor 1 (the working device 2) is usually used at the standard maximum output and is temporarily requested to be used at the changed maximum output, the tractor 1 (the working device 2) can be used at the changed maximum output when the time (the output change time) is set.

In addition, the display device 50 provided in the tractor 1 is configured to set the output change time. Thus, the operator or the like can easily set the output change time by arbitrarily operating the setting screen M2 or the like while boarding on the tractor 1. That is, it is possible for the operator to easily set the time to perform the working with the maximum output of the tractor 1 higher than the standard maximum output.

Next, the configuration and operation in which the control device 30 changes the maximum output of the prime mover 4 with use of the working device 2 will be described below in detail.

The control device 30 includes a change device obtaining part 37a and a change device setting part 37b. The change device obtaining part 37a and the change device setting part 37b are constituted of electric/electronic parts provided in the control device 30, programs incorporated in the control device 30 and the like, and the like. The change device obtaining part 37a obtains information (referred to as device information) of the working device 2 whose maximum output is to be changed. For example, a working device (referred to as a target device) 2 whose output is to be changed by the display device 50 is set, and the change device obtaining part 37a obtains the device information of the target device 2 set by the display device 50.

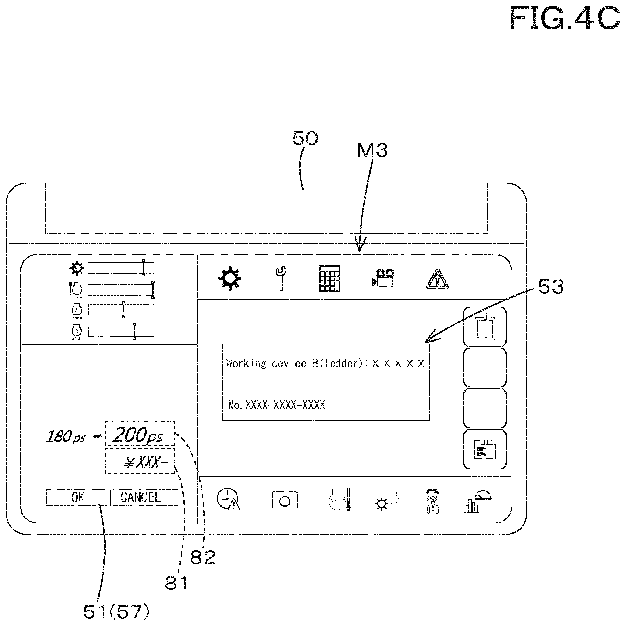

In particular, as shown in FIG. 4C, when a predetermined operation is performed, the display device 50 displays the setting screen M3. On the setting screen M3, an information inputting part 53 configured to input the information (the device information) of the target device 2 is displayed. Identification information such as the name, model, model number, serial code, and the like of the device can be inputted as the device information to the information inputting part 53.

For example, the device information (the name, the model, the model number, the identification information, and the like) to be inputted to the information inputting part 53 is input by the operations of the first setting tool and the second setting tool. When the finish button 51 indicated on the setting screen M3 is selected, the device information inputted to the information inputting part 53 of the setting screen M3 is set as the device information of the working device 2 whose maximum output is to be changed.

That is, as shown in FIG. 4C, the "working device B" inputted to the information input part 53 of the setting screen M3 is set to the device information. The display device 50 outputs the device information set on the setting screen M3 to the control device 30. When the device information outputted from the display device 50 is inputted to the control device 30, the change device obtaining part 37a of the control device 30 obtains the device information. The storage part 32 of the control device 30 stores the device information obtained by the change device obtaining part 37a.

In the case where the device information obtained by the change device obtaining part 37a indicates the working device 2 connected to the connecting part 8, the change device setting part 37b outputs a change command to the change obtaining part 31 of the control device 30. For example, after the ignition switch of the tractor 1 is turned on, the change device setting part 37b refers to the device information (referred to as storage device information) stored in the storage part 32. In addition, after the ignition switch of the tractor 1 is turned on, the change device setting part 37b makes a request for the device information (attachment device information) to the working device 2 connected to the connecting part 8.

In the case where the storage device information indicates the attachment device information transmitted from the working device 2 (in the case where the name indicated in the storage device information is matched with the name indicated in the attachment device information, in the case where the model or the model number indicated in the storage device information is matched with the model or the model number indicated in the attachment device information, and in the case where the identification information indicated in the storage device information is matched with the identification indicated in the attachment device information), or the like, the change device setting part 37b outputs the change command to the change obtaining part 31 of the control device 30.

That is, in the case where the storage device information and the attachment device information correspond (are linked) to each other, the change device setting part 37b outputs the change command to the change obtaining part 31 of the control device 30. In this manner, in the case where the storage device information and the attachment device information correspond to each other, the prime mover 4 is controlled on the basis of the change control map PCM.

On the other hand, in the case where the storage device information and the attachment device information do not correspond to each other after the ignition switch is turned on, the change time setting part 36b does not output the change command to the change obtaining part 31. That is, in the case where the device information obtained by the change device obtaining part 37a does not indicate the working device 2, the change time setting part 36b does not output the change command to the change obtaining part 31. In that case, the prime mover 4 is controlled on the basis of the standard control map SCM.

According to the third example described above, the prime mover 4 changes the maximum output on the basis of the working device 2 connected to the vehicle body 3. The tractor 1 is provided with the change device obtaining part 37a and the change device setting part 37b. In this manner, depending on the working device 2 connected to the tractor 1, the standard maximum output and the changed maximum output can be selectively used as the maximum output of the prime mover 4.

In addition, the display device 50 provided in the tractor 1 can set the device information of the working device 2 whose maximum output is to be changed. In this manner, the operator or the like can easily set the target device 2 (the device information) by arbitrarily operating the setting screen M3 or the like while boarding on the tractor 1. That is, it is possible to easily set the working device 2 requested by the operator to be operated with the maximum output of the tractor 1 higher than the standard maximum output.

Next, the configuration and operation of the control device 30 to change the maximum output of the prime mover 4 by the operation of the change operation member 43 will be described below in detail.

As shown in FIG. 1, the control device 30 and the change operation member 43 are connected to each other. Regardless of whether the change operation member 43 is a changeover switch, a slide switch, or a rotary switch after the ignition switch is turned on, the control device 30 is configured to obtain the operation (a change unrequested operation) that does not change the maximum output of the prime mover 4 and the operation (a change requested operation) that changes the maximum output of the prime mover 4 after the ignition switch is turned on.

As described above, in the case where the changeover switch is in the OFF state and the slide switch and the rotary switch are in the first position, the control device 30 obtains the change unrequested operation from the change operation member 43, and thus the prime mover 4 is controlled on the basis of the standard control map SCM.

On the other hand, in the case where the changeover switch is in the ON state and the slide switch and the rotary switch are in the second position, the control device 30 obtains the change requested operation from the change operation member 43, thus the standard control map SCM is switched to the change control map PCM, and then the prime mover 4 is controlled on the basis of the change control map PCM.

According to the fourth example mentioned above, the tractor 1 is provided with the change operation member 43. The prime mover 4 changes the maximum output when the change command member 43 is operated. In this manner, the operator can change the maximum output of the tractor 1 by arbitrarily manipulating the change operation member 43 at the timing at which it is desired to change the maximum output.

That is, the standard maximum output and the changed maximum output can be selectively used as the maximum output of the prime mover 4 only by the operation of the change command member 43. In addition, since the change operation member 43 is provided on the front side of or on the lateral side of the operator seat 10, the operator can operate the change command member 43 in while steering the tractor 1.

In the embodiment described above, the control device 30 is provided with the change position obtaining part 35a, the change position setting part 35b, the change time obtaining part 36a, the change time setting part 36b, the change device obtaining part 37a, and the change device setting part 37b. However, all of or at least one of these may be provided in the display device 50.

As described in the first example to the fourth example, it is not necessarily required for the tractor 1 to include all of the change position obtaining part 35a, the change position setting part 35b, the change time obtaining part 36a, the change time setting part 36b, the change device obtaining part 37a, the change device setting part 37b. And, the tractor 1 may include at least one of the above-described configurations or a combination of a plurality of them.

Now, the tractor 1 is provided with a display device (an output display device) configured to display an output of the prime mover 4. In the embodiment, the output display device is the display device 50 described above. In addition, the output display device displays the output of the prime mover, that is, the internal combustion engine such as a diesel engine, a gasoline engine or the like. Further, the displaying form (a unit) of the output of the prime mover 4 in the output display device may employ the "PS" or the "HP" indicating the horsepower, the "Kw", or other notation.

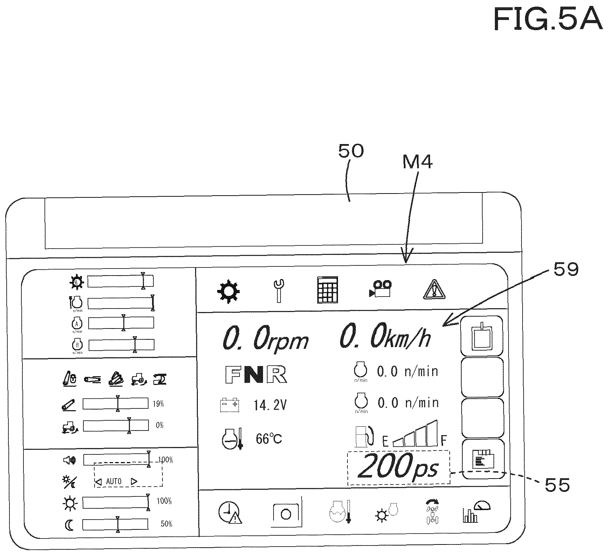

As shown in FIG. 5A, the display device 50 is configured to display a driving screen M4 including the output information of the prime mover 4. The information (the output information) relating to the output of the prime mover can be displayed on the driving screen M4. In addition, on the driving screen M4, it is possible to display the information relating to the driving (the information on the driving operation). For example, the driving screen M4 has an driving display part 59, and the engine rotations speed, the water temperature, the fuel, the vehicle speed (the traveling speed) are displayed on the driving display part 59.

The water temperature is a value detected by the water temperature sensor 21e connected to the control device 30. The fuel is a value detected by the fuel sensor 21f connected to the control device 30, and the vehicle speed (the traveling speed) is a value detected by the vehicle speed sensor 21g connected to the control device 30.

An output display area 55 for displaying the output information is allocated on the driving screen M4. The information indicating the present maximum output of the prime mover 4 can be displayed on the output display area 55. In the case where the standard controlling part 33 controls the prime mover 4, the "180 PS" that is the maximum output indicated based on the standard control map SCM is displayed on the output display area 55.

On the other hand, in the case where the change controlling part 34 controls the prime mover 4, the "200 PS" that is the maximum output indicated based on the change control map PCM is displayed on the output display area 55. That is, it is possible to selectively display, in the table display area 55, the output "180 PS" before the changing of the maximum output of the prime mover 4 and the output "200 PS" after the changing of the maximum output of the prime mover 4.

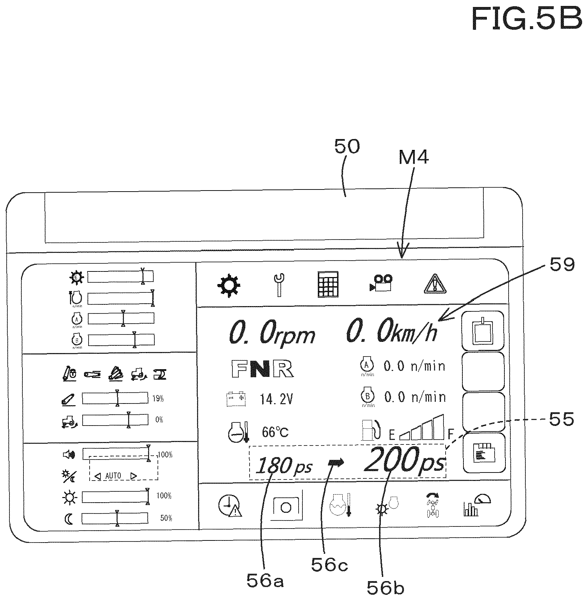

Meanwhile, as shown in FIG. 5B, the output (the information indicating the standard maximum output) 56a before the changing of the maximum output of the prime mover 4 and the output (the information indicating the changed maximum output) 56b after the changing of the maximum output of the prime mover 4 both may be displayed, And, the indicating part 56c indicating which one of the outputs 56a and 56b is the current maximum output.

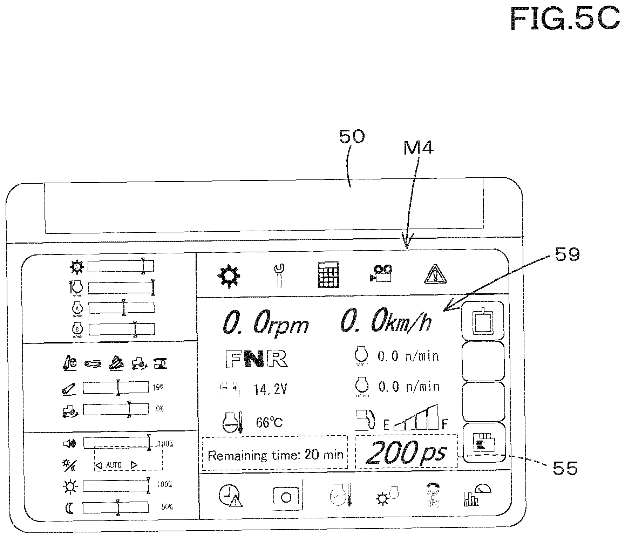

In addition, as shown in FIG. 5C, in the case where the maximum output of the prime mover 4 is changed to the changed maximum output according to the output change time, it is preferred for the display device 50 to display, on the driving screen M4, remaining time (the remaining time from the start of the changed maximum output to the changing to the standard change output) 83, that is, the remaining time from the start of the changing of the maximum output to the end of the changing of the maximum output.

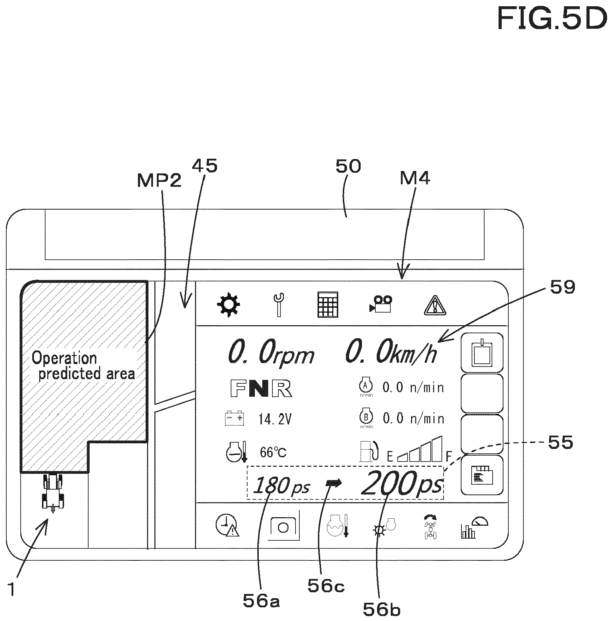

In addition, as shown in FIG. 5D, the display device 50 may display the agricultural field map 45 and the current position of the tractor on the driving screen M4, and may display the operation predicted area of the tractor 1 predicted from the remaining time (an area for the operation within the remaining time) MP2 on the driving screen M4.

For example, the area S of the operation predicted area MP2 is obtained on the basis of the vehicle speed (km/h) of the tractor 1, the remaining time (h), and the working width (m) of the working device 2 in the equation "Area of the operation predicted area MP2 = The vehicle speed (km/h) × The remaining time (h) × the working width (m)", the current machine position is matched with the boundary of the operation predicted area MP2, and then the operation predicted area MP2 is displayed on the field map 45. Meanwhile, note that how to obtain the operation predicted area is just an example, and is not limited to the description mentioned above.

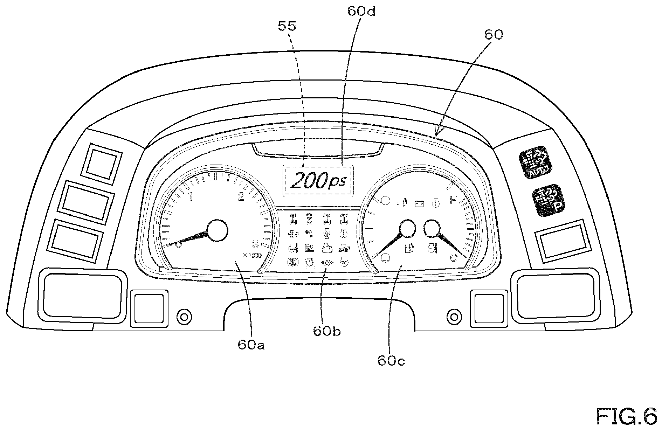

Further, as shown in FIG. 6, the output display device may be a display device (a meter panel) 60 different from the display device 50 mentioned above. In the case of FIG. 6, the meter panel 60 is arranged in front of the operator seat 10, and the display device 50 is provided on the lateral side of the operator seat 10. The meter panel 60 includes a revolutions speed displaying part 60a configured to display the engine rotations speed with use of a pointer meter, a warning displaying part 60b configured to display a warning or the like by turning on or blinking LEDs, a status displaying part 60c configured to display the water temperature, the fuel, and the like with use of a pointer meter or the like, and a variable displaying part 60d constituted of a liquid crystal or the like and configured to display various types of information.

An output display area 55 is set in the variable display part 60d. Similar to the display device 50, in the case where the maximum output of the prime mover 4 is set to the standard maximum output, the standard maximum output is displayed on the variable display part 60d. In addition, in the case where the maximum output of the prime mover 4 is set to the changed maximum output, the changed maximum output is displayed on the variable display part 60d.

In addition, in the case where the maximum output of the prime mover 4 is changed to the changed maximum output according to the output change time, it is preferred that the output display devices (the display device 50 and the meter panel 60) output the maximum output of the prime mover 4 during the remaining time until the changed maximum output is completed (the remaining time until the changed maximum output is completely switched to the standard change output).

As described above, the tractor 1 includes the output display devices (the display device 50 and the meter panel 60) configured to display the output of the prime mover. In addition, the output display device is provided in front of or on the lateral side of the operator seat 10. Thus, in the operation of the tractor 1 by the operator, the operator can watch the output display device as to know whether the maximum output of the prime mover 4 is set to the "standard maximum output" or to the "changed maximum output". Since the output display device displays the maximum output of the prime mover 4 before the changing and the maximum output of the prime mover 4 after the changing, it is possible to know both of the maximum output before the changing and the maximum output after the changing.

Meanwhile, although the output display device mentioned above displays the maximum output, the output display device may display the current output of the prime mover 4. For example, in the case where the prime mover 4 is being controlled by the standard controlling part 33, the output display area 55 displays an output corresponding to the current engine revolutions speed (the output displayed on the standard control map SCM) on the basis of the current engine revolutions speed and the standard control map SMC.

In addition, in the case where the change controlling part 34 controls the prime mover 4, the output display area 55 displays an output corresponding to the current engine revolutions speed (the output displayed on the change control map PCM) on the basis of the current engine revolutions speed and the change control map PMC. In this manner, the output display device displays the current output before the changing of the output of the prime mover 4 and the current output after the changing of the output of the prime mover 4, and thus it is possible for the operator to easily know the status of the current output of the prime mover 4.

As shown in FIG. 1, the control device 30 may have a change time calculating part 38. The change time calculating part 38 is composed of electric/electronic parts provided in the control device 30, programs incorporated in the control device 30 and the like, and the like. The change time calculating part 38 calculates the elapsed time from the changing of the maximum output of the prime mover 4.

For example, in changing from the standard controlling part 33 to the change controlling part 34, the change time calculating part 38 calculates the elapsed time during when the prime mover 4 is controlled by the change controlling part 34. The output display device displays the elapsed time in the output display area 55. In this manner, the operator can know how much time has elapsed after the changing of the maximum output.

In the embodiment described above, the changed maximum output is assumed to be higher than the standard maximum output. However, the changing of the maximum output is not limited thereto, and the changed maximum output may be lower than the standard maximum output, for example, the standard maximum output may be 180 PS and the changed maximum output may be 160 PS. In addition, although the single standard maximum output is set for the single tractor 1, the two or more changed maximum outputs may be set for the single tractor 1.

For example, the standard maximum output may be 180 PS, the changed maximum output may be 160 PS and 200 PS, and the standard maximum output may be 180 PS, the changed maximum output may be 200 PS and 220 PS. That is, in the case where the standard maximum output is indicated by "V1" and the changed maximum output is indicated by "V2", any one of the following equation, V2 <V1 <V2, V1 > V2, and V1 < V2, may be satisfied.

As described above, the prime mover 4 is configured to change the maximum output. However, in changing the maximum output, the prime mover 4 (tractor 1) notifies the operator or the like who operates the tractor 1 of the cost for the changing, and the maximum output may be changed when the operator confirms the cost notification (Acknowledgment).

The cost is provided for the monetary deal (the financial deal) between the user side using the tractor 1 (an operator, a worker, a manager, a company, and the like) and the provider side of the tractor 1 (a service company of tractor, a rental company of tractor, a manufacturing company of tractor, and the like), which is money, points set in advance by service, or the like.

In addition, in the case where the changed maximum output is increased with respect to the standard maximum output (V1 <V2), the cost on the user side (the cost displayed in the tractor 1) is positive, and the user must pay the cost to the provider. On the other hand, in the case where the changed maximum output is decreased with respect to the standard maximum output (V1> V2), the cost on the user side is negative, and the provider must pay the cost to the user. Further, the relation between the changed maximum output after the changing and the cost is stored in the control device 30, the display device 50, and the like.

For example, the cost to be paid by the user is increased every time when the changed maximum output increases by 1PS with respect to the standard maximum output, and the cost to be paid by the provider is increased every time when the changed maximum output decreases by 1PS with respect to the standard maximum output. The method of setting the cost and the like is not limited to the method mentioned above.

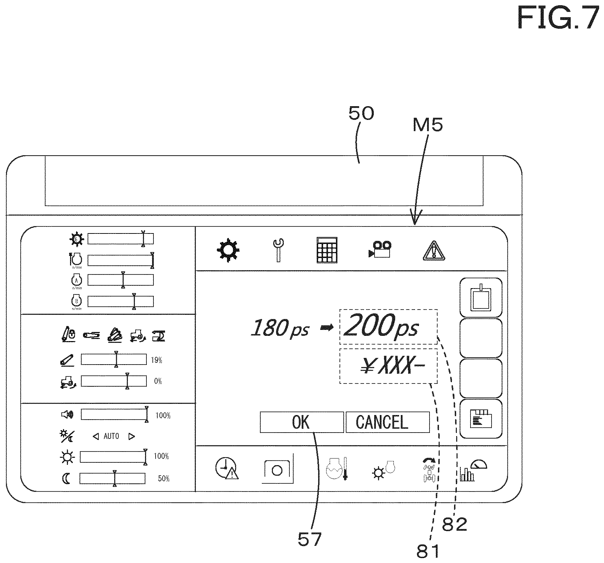

The display device 50 displays the cost generated by the changing of the output. As shown in FIG. 7, for example, in changing the maximum output of the prime mover 4 (in the case where the machine position is matched with the output change position, in the case where the counted time is matched with the output change time, and in the case where the working device indicates the device information), or before the operation of the output change by the change operation member 43 (the changeover switch is OFF, either one of the slide switch and the rotary switch is in the first position), the display device 50 displays the confirmation screen M5 indicating the cost generated by the changing of the output power, displays the cost in the cost displaying part 81 allocated in the confirmation screen M5.

In addition, the display device 50 displays a confirmation member (a button indicating the confirmation (the acknowledgment) of the generation of cost) 57 on the confirmation screen M5. When the confirmation member 57 is selected, the control device 30 changes the maximum output of the prime mover 4, that is, changes the output power from the standard maximum output to the changed maximum output. The display device 50 may display the maximum output scheduled to be changed in the output displaying part 82 allocated in the confirmation screen M5.

Meanwhile, as shown in FIG. 4A, FIG. 4B, and FIG. 4C, the display device 50 displays the cost displaying part 81 in the case where the output power is changed in the setting screen M1, the setting screen M2, and the setting screen M3, and the control device 30 may continue the processing on the assumption that the confirmation member 57 is selected in the case where the finish button 51 is selected. That is, the finish button 51 may also be used as the confirmation member 57 commonly.

Alternatively, in the case where the cost displaying part 81 is displayed on the display device 50 and further the operation of the output change is performed by the change operation member 43, the operation of the change operation member 43 may be treated as the confirmation of the cost generation. That is, the change operation member 43 may also be used as a confirmation member for confirming the cost for the changing of the output. In addition, the output displaying part 82 may be displayed on the setting screen M1, the setting screen M2, and the setting screen M3.

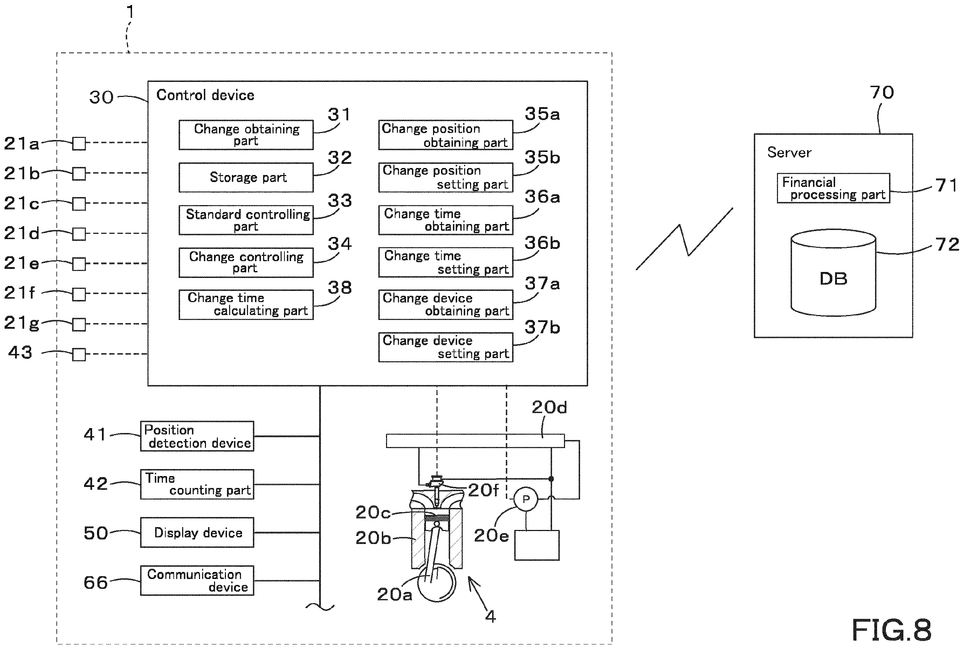

As shown in FIG. 8, the tractor 1 may be provided with a communication device 66. The communication device 66 is connected to the control device 30, and configured to output the information to the control device 30, the information being transmitted from the outside and to transmit the information of the control device 30 to the outside.

The communication device 66 is constituted of a communication device configured to perform the short-range communication or the long-range communication, and is configured to perform the wireless communication in, for example, the Bluetooth Low Energy (a registered trademark) in the specification of the Bluetooth (a registered trademark) of the communication standard IEEE 802.15.1 series, the WiFi (a registered trademark) of the communication standard IEEE 802 .11.n series, or the like.

In addition, the communication device 66 may be constituted of a communication device configured to perform the wireless communication through a mobile phone communication network, a data communication network, a cellular phone communication network, or the like.

As described above, in the case where it is confirmed that the costs are generated (in the case where it is accepted that the costs will be generated), the display device 50 outputs the processing information to the communication device 66, the processing information including the confirmation of the costs generation. The communication device 66 transmits the processing information to the server 70 on the provider side of the tractor 1. The processing information includes at least identification information for identifying the tractor 1 and the costs. The server 70 executes the financial processing after receiving the processing information.

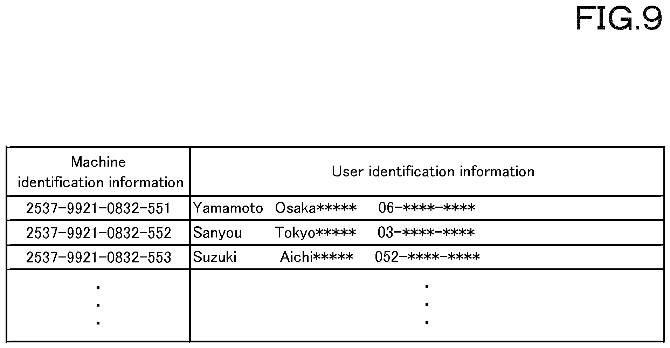

In particular, the server 70 includes a financial processing part 71 and a user database (a DB) 72. As shown in FIG. 9, the user database 72 stores and associates the identification information (the machine identification information) of the tractor 1 and the identification information (the user identification information) of the user with each other. The identification information of the tractor 1 is the name, the model, the model number, the manufacturing number, and the like of the tractor 1, and the unique information is assigned to the tractor 1.

The identification information of the user is the name, the address, the telephone number, the e-mail address, and the like of the user, and the specific unique information is assigned to the user. The association between the identification information of the tractor 1 and the identification information of the user is made in the using of the tractor 1 by the user, for example, in the purchasing of the tractor 1, in the renting of the tractor 1, or the like.

The financial processing part 71 is constituted of electric/electronic parts provided in the server 70, programs incorporated in the server 70, and the like. The financial processing part 71 performs the financial processing relating to the finance for the user associated with the tractor 1 that has changed the output power. As the financial processing, the financial processing part 71 specifies the user (the identification information of the user) associated with the tractor 1 on the basis of the identification information of the tractor 1, and generates the information (the cost information) relating to the costs for the user. In the case where the costs is charged from the provider side to the user, the financial processing part 71 generates the billing data of the user as the cost information, performs the predetermined processing with a server such as a financial institution, and then sends the billing data to the financial institution. The financial institution performs the billing processing of the costs to the user on the basis of the billing data transmitted from the financial processing part 71, and then executes the payment processing and the like of the costs to the provider side, the costs being paid by the user.

On the other hand, in the case where the provider side pays the costs to the user, the financial processing part 71 generates the payment data of the user as the cost information, performs the predetermined processing with the server of the financial institution or the like, and then send the payment data to the financial institution. The financial institution executes the deposit of the costs to a predetermined account or the like of the user on the basis of the payment data transmitted from the financial processing part 71. Meanwhile, the processing of the financial processing part 71 is an example, and is not limited to the method described above.

### (Second embodiment)

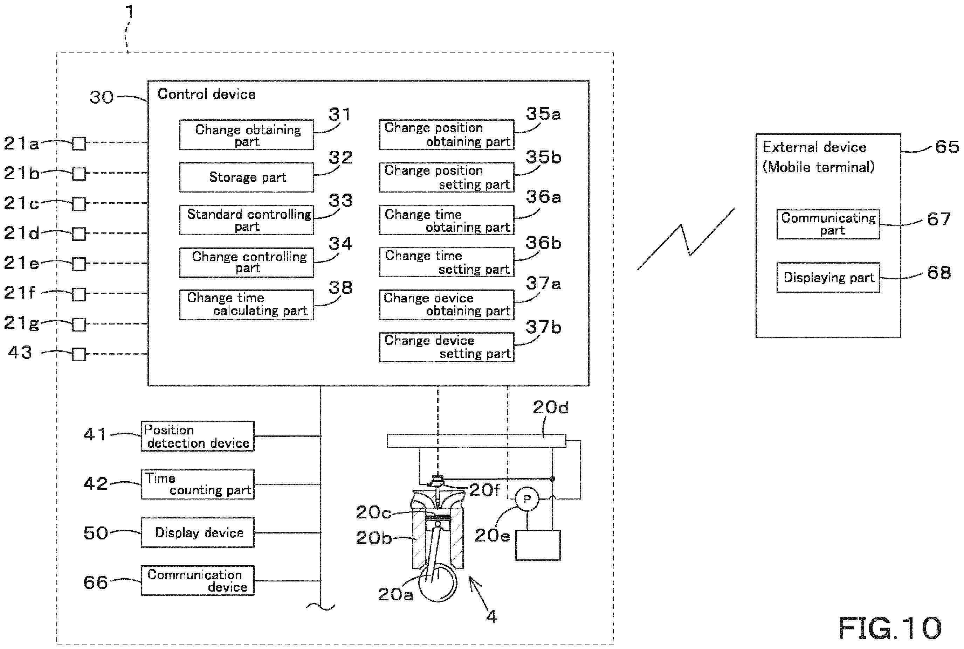

FIG. 10 is a control block diagram of the tractor 1 according to a second embodiment of the present invention. In the second embodiment, configurations different from those of the first embodiment will be described below.

As shown in FIG. 10, an external device 65 connectable to the tractor 1 is provided, and the external device 65 is configured to display any one of the setting screen M1, the setting screen M2, and the setting screen M3, and to display the change operation member 43.

The external device 65 is a mobile terminal and the like such as a smartphone, a tablet, a PDA, or the like. Explanation is made on the assumption that the external device 65 is a mobile terminal.

The mobile terminal (the external device) 65 includes a communicating part 67 and a displaying part 68. The communicating part 67 is constituted of a communication device configured to perform the short-range communication or the long-range communication, and is configured to perform the wireless communication in, for example, the Bluetooth Low Energy (a registered trademark) in the specification of the Bluetooth (a registered trademark) of the communication standard IEEE 802.15.1 series, the WiFi (a registered trademark) of the communication standard IEEE 802 .11.n series, or the like.

Meanwhile, it should be noted that the communicating part 67 may be a communication device configured to perform the wireless communication using a mobile phone communication network, a data communication network, a cellular phone communication network, or the like. That is, the tractor 1 and the mobile terminal 65 can be connected by the communication device 66 and the communication device (the communicating part) 67.

The displaying part 68 of the mobile terminal 65 is configured to display the setting screen M1 for setting the output change position, the setting screen M2 for setting the output change time, and the setting screen M3 for setting the device information. In the case when any one of the settings of the output change position by the setting screen M1, the output change time by the setting screen M2, and the device information by the setting screen M3 is completed, the communicating part 67 transmits any one of the output change position, the output change time, and the device information to the communication device 66. The output change time, or the device information, the communication device 66 is configured to output the received output change position, the received output change time, and the received device information to the control device 30 after receiving the output change position.

In addition, the displaying part 68 of the mobile terminal 65 is configured to display a figure indicating the change operation member 43. In the case where the figure indicating the change operation member 43 displayed on the displaying part 68 is operated, the communicating part 67 transmits the change command of the prime mover 4 to the communication device 66. After receiving the change command of the prime mover 4, the communication device 66 outputs the received change command to the control device 30.

As described above, it is possible for the mobile terminal 65 that is the external device to transmit either one of the output change position, the output change time, and the device information to the tractor 1. In addition, the mobile terminal 65 is configured to transmit the change command of the prime mover 4 to the tractor 1.

In the embodiment described above, the maximum output is changed by the position, the time, the device information, the operation of the change operation member 43, and the like. However, in addition to that, the control device 30 may also judge whether the maximum output changing may be executed, on the basis of the attachment device information and the like of the working device 2.

The relation between the maximum output (the required maximum output) necessary for the working and the attachment device information is stored in the storage part 32 of the control device 30, and the control device 30 is configured to obtain the required maximum output of the working device 2 attached to the tractor 1 on the basis of the attachment device information of the working machine 2.

When the performance of the working device 2 can not be provided sufficiently or the like in the case where the working device 2 is operated with the maximum output of the prime mover 4 after the changing, the control device 30 does not provide permission to the change of the maximum output (non-permission to the change of the maximum output). That is, in the case where the required maximum output of the working device 2 attached to the tractor 1 is equal to or higher than the changed maximum output, the control device 30 does not provide the permission to the change of the maximum output.

In addition, in the case where the performance of the working device 2 can be demonstrated when the working device 2 is operated with the maximum output the prime mover 4 after the changing, the control device 30 permits the changing of the maximum output. That is, in the case where the required maximum output of the working device 2 attached to the tractor 1 is less than the changed maximum output, the control device 30 permits the changing of the maximum output.

For example, when the required maximum output of the working device 2 is 220 PS, the control device 30 provides non-permission to the change of the maximum output and displays the non-permission on the display device 50 even in the case where the standard maximum output is 180 PS and the changed maximum output is 200 PS and further the maximum output is increased by 20 PS with respect to the standard maximum output of the prime mover 4.

Here, in the case where the change of the maximum output can not be permitted, the display device 50 guides the condition under which the maximum output can be changed. As the condition under which the maximum output can be changed, the display device 50 displays guidance "Change the maximum output to 220PS or more in order to operate the working device 2"or "Change the working device to the working device B", for example.

On the other hand, in the case where the maximum output is increased by 20 PS with respect to the standard maximum output of the prime mover 4 and further the working device 2 is sufficiently operated at the required maximum output of 190 PS, the control device 30 permits the change of the maximum output and displays the permission on the display device 50.

### (Third embodiment)

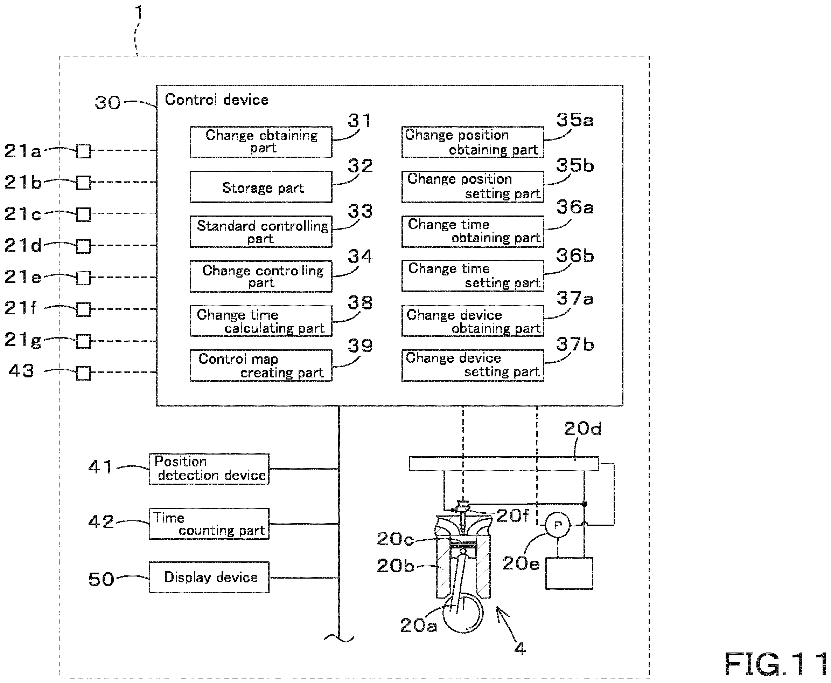

FIG. 11 shows a control block of the working machine 1 according to a third embodiment of the present invention. In the third embodiment, configurations different from those of the first embodiment and the second embodiment will be described below.

As shown in FIG. 11, a control map creating part 39 is provided. The control map creating part 39 is constituted of electric/electronic parts provided in the control device 30, programs incorporated in the control device 30 and the like, and the like. The control map creating part 39 is configured to change the standard control map SCM stored in the storage part 32 and thereby creates a change control map PCM. In the case where the change obtaining part 31 obtains the change command, the control map creating part 39 creates the change control map PCM on the basis of the standard control map SCM.

For example, in the case where the maximum output indicated in the standard control map SCM is 180 PS, the control map creating part 39 changes the parameters and the like of the standard control map SCM having the maximum output of 180 PS, and thereby creates the change control map PCM having the changed maximum output of 200 PS.

After the change control map PCM is generated by the control map creating part 39, the change controlling part 34 controls the fuel injection amount, the injection timing, the fuel injection rate, the fuel injection pressure, and the like on the basis of the created change control map PCM.

In addition, in the embodiment described above, the control map creating part 39 creates the change control map PCM from the standard control map SCM in the case where the change obtaining part 31 obtains the change command. However, it is also possible to create the change control map PCM with use of the display device 50.

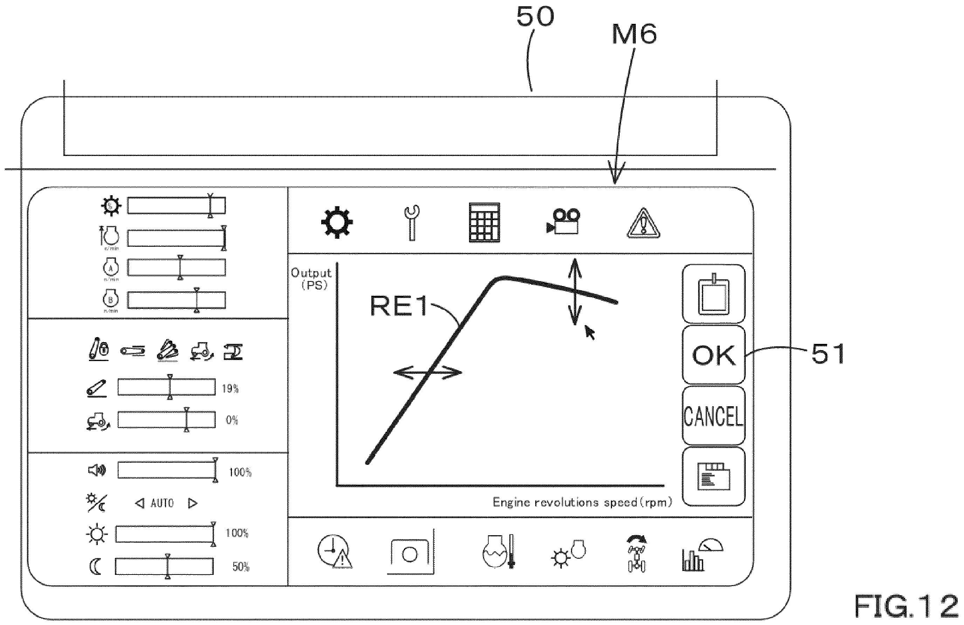

As shown in FIG. 12, the control map creating part 39 displays the setting screen M6 on the display device 50 after the start of the prime mover 4. for example. The standard control map SCM is displayed on the setting screen M6. A shape RE1 of the standard control map SCM on the setting screen M6 can be changed by the operation of the display device 50.

For example, the shape RE1 of the standard control map SCM can be modified in each of the longitudinal direction extending along the output axis (PS) and the lateral direction extending along the engine revolutions speed (rpm), the longitudinal direction and the lateral direction each being shown in the setting screen M6. When the finish button 51 displayed on the setting screen M6 is selected after the changing of the shape RE1 of the standard control map SCM, the control map creating part 39 sets the changed standard control map SCM as the change control map PCM. The change control map PCM is stored in the storage part 31.

### (Fourth embodiment)

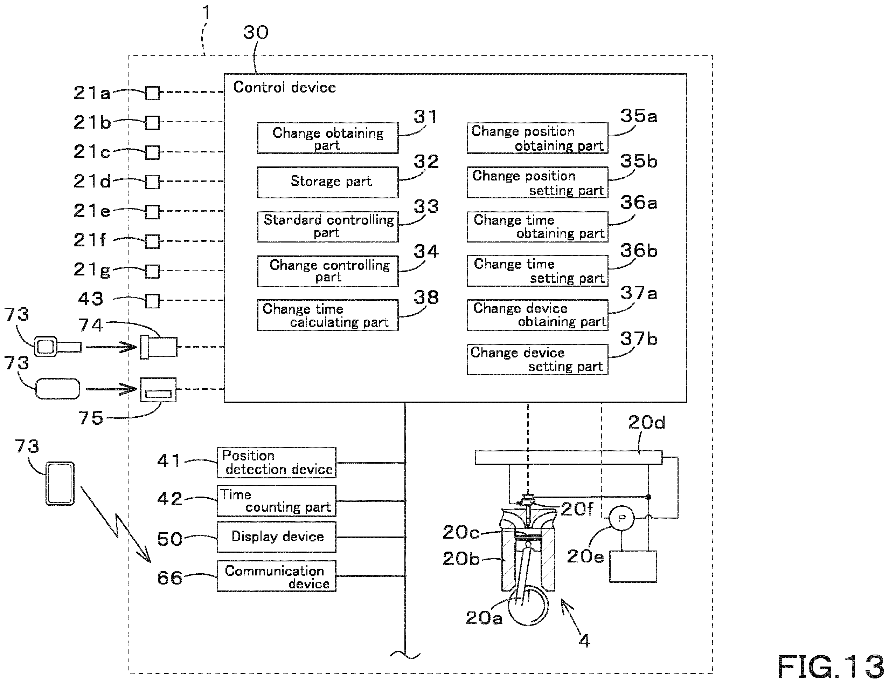

FIG. 13 shows a control block of the working machine 1 according to a fourth embodiment of the present invention. In the fourth embodiment, configurations different from those of the first embodiment to the third embodiment will be described below.

In the fourth embodiment, as shown in FIG. 13, authentication processing is performed using the key device 73 in the changing of the maximum output of the prime mover 4. And, the predetermined authentication information (the storage authentication information) is stored in the storage part 32 of the control device 30 at the time of manufacturing the tractor 1 or the like.

The authentication information (the external authentication information) is stored in a key device 73 at the time of manufacturing the tractor 1 or the like, the key device 73 being configured to turn on the ignition switch. The key device 73 is constituted of a start key, an IC card, a mobile terminal, or the like. Meanwhile, the identification information mentioned above of the tractor 1 may be employed as the storage authentication information, and the identification information of the user may be employed as the external authentication information.

in the case where the key device 73 is the start key, the start key is configured to be inserted into the key cylinder 74 provided in the tractor 1. Upon insertion into the key cylinder 74, the start key transmits the external authentication information to the control device 30 through the key cylinder 74.

After establishment of the authentication between the external authentication information and the storage authentication information, the control device 30 turns the ignition switch from OFF to ON. After the authentication by the authentication information is established at the time of starting the prime mover 4, the control device 30 switches the changing of the maximum output of the prime mover 4 from "to be invalid" to "to be valid".

In addition, in the case where the key device 73 is the IC card, the IC card is configured to output the external authentication information to a reading device (a reader device) 75 provided in the tractor 1. After obtaining the external authentication information, the reading device 75 transmits the obtained external authentication information to the control device 30. Similar to the start key, the control device 30 switches the ignition switch from OFF to ON, and switches the changing of the maximum output of the prime mover 4 from " to be invalid" to "to be valid" when the authentication information is established.

In addition, in the case where the key device 73 is the mobile terminal, the mobile terminal transmits the external authentication information to the communication device 66 provided in the tractor 1 at the start of starting of the prime mover 4. After obtaining the external authentication information, the communication device 66 transmits the obtained external authentication information to the control device 30. Similar to the start key, the control device 30 switches the ignition switch from OFF to ON, and switches the changing of the maximum output of the prime mover 4 from "to be invalid" to " to be valid" when the authentication information is established.

As described above, the authentication information is authenticated at the time of starting the prime mover 4, and then the maximum output of the prime mover 4 can be changed after the authentication is established. In this manner, the maximum output of the prime mover 4 can be prevented from being changed by illegal means. That is, it is possible to allow only an authorized user to change the maximum output of the prime mover 4.

In the above description, the embodiment of the present invention has been explained. However, all the features of the embodiments disclosed in this application should be considered just as examples, and the embodiments do not restrict the present invention accordingly. A scope of the present invention is shown not in the above-described embodiments but in claims, and is intended to include all modifications within and equivalent to a scope of the claims.

In the embodiments described above, the output display device such as the display device 50 displays the maximum output of the prime mover 4. However, it is not limited to the maximum output, and the display device 50 may display the output of the prime mover 4 other than the maximum output. And, the display device 50 may display the current output of the prime mover 4, the output before the changing of the output, and the output after the changing of the output.

In other words, in the display of the output on the output display device, the above-described "maximum output" may be replaced with the "output", and may be applied to the output display device.

In the embodiments described above, the output of the prime mover 4 is changed depending on the time (the output change time), the position (the output change position), and the devices (the device information). In addition to that, the output of the prime mover 4 may be changed by a person (the operator).

For example, in the case of the operator, the control device 30 changes the output of the prime mover 4, for example, the standard maximum output to the changed maximum output in the case where an operator associated with the tractor 1 boards on the tractor 1. In the detection of the operator, it is judged whether or not the operator is related to the tractor 1 with use of an imaging device such as a camera or the like provided in the tractor 1, the fingerprint authentication, or the like.

In the embodiments described above, the change operation member 43 is constituted of a member dedicated for instructing the changing or confirming the costs. However, the change operation member 43 may also be provided in the tractor 1 or the like and may also serves as a work operation member for operating the working.

In addition, in the embodiments described above, after the changing of the maximum output of the prime mover 4 to the changed maximum output, the output to a predetermined engine revolutions speed may be temporarily changed depending on various driving (operation) states of the tractor 1 or the like under the condition where the maximum output does not exceed the changed maximum output.

For example, in order to improve the fuel consumption, the change control map PCM may be controlled to temporarily shift to the side of lowering the output. That is, the change control map PCM may be temporarily changed under the certain constraints on various driving (operation) of the tractor 1 and the like.

## Claims

1. A working machine comprising:
a vehicle body configured to be coupled to a working device; and
a prime mover disposed on the vehicle body and configured to change a maximum output.

2. The working machine according to claim 1, comprising a control device configured to control the prime mover, the control device having
a change obtaining part configured to obtain a change command to change the maximum output of the prime mover,
wherein the control device is configured to change the maximum output when the change obtaining part obtains the change command.

3. The working machine according to claim 2,
wherein the control device includes:
a storage part configured to store:
a standard control map representing a relation between a revolution speed of the prime mover and an output of the prime mover; and
a change control map other than the standard control map, the change control map representing a relation between the revolution speed of the prime mover and the output of the prime mover;
a standard control part configured to control the prime mover based on the standard control map when the change obtaining part does not obtain the change command; and
a change control part configured to control the prime mover based on the change control map when the change obtaining part obtains the change command.

4. The working machine according to claim 2,
wherein the control device includes:
a storage part configured to store a standard control map representing a relation between a revolution speed of the prime mover and an output of the prime mover;
a control map creation part configured to change the standard control map stored in the storage part and to create a change control map;
a standard control part configured to control the prime mover based on the standard control map when the change obtaining part does not obtain the change command; and
a change control part configured to control the prime mover based on the change control map when the change obtaining part obtains the change command.

5. The working machine according to any one of claims 1 to 4, comprising
a position detecting device configured to detect a machine position that is a position of either one of the vehicle body and the working device,
wherein the prime mover is configured to change the maximum output based on the machine position detected by the position detecting device.

6. The working machine according to any one of claims 1 to 4, comprising
a time counting part configured to count time,
wherein the prime mover configured to change the maximum output based on the time counted by the time counting part.

7. The working machine according to any one of claims 1 to 4,
wherein the prime mover is configured to change the maximum output based on the working device coupled to the vehicle body.

8. The working machine according to any one of claims 1 to 7, comprising:
an operator seat; and
a change-operation member disposed forward from or lateral to the operator seat and configured to change the change command when being operated,
wherein the prime mover is configured to change the maximum output when the change-operation member is operated.

9. The working machine according to any one of claims 2 to 4, comprising:
a position detecting device configured to detect a machine position that is a position of either one of the vehicle body and the working device;
a change-position obtaining part configured to obtain an output-change position that is a position where the maximum output is changed; and
a change-position setting part configured to output the change command to the change obtaining part when the machine position is matched with the output-change position obtaining by the change-position obtaining part.

10. The working machine according to claim 9, comprising
a display device configured to set the output-change position.

11. The working machine according to anyone of claims 2 to 4, comprising:
a time counting part configured to count time;
a change-time obtaining part configured to obtain an output-change time that is time when the maximum output is changed; and
a change-time setting part configured to output the change command to the change obtaining part when the time counted by the time-counting part is matched with the output-change time obtaining by the change-time obtaining part.

12. The working machine according to claim 11, comprising
a display device configured to set the output-change time that is time when the maximum output is changed.

13. The working machine according to any one of claims 2 to 4, comprising:
a change-device obtaining part configured to obtain device information of the working device whose maximum output is changed; and
a change device setting part configured to output the change command to the change obtaining part when the device information obtained by the change-device obtaining part represents the working device coupled to the vehicle body.

14. The working machine according to claim 13, comprising
a display device configured to set the device information of the working device whose maximum output is changed.

15. The working machine according to any one of claims 1 to 14,
wherein the change obtaining part obtains the change command from an external device.

16. The working machine according to any one of claims 1 to 15, comprising
a change-time calculating part configured to calculate an elapsed time counted from the changing of the maximum output of the prime mover.

17. The working machine according to any one of claims 1 to 9,
wherein the prime mover is configured to change a maximum output,
and wherein the display device is configured to display the maximum output after changed.

18. The working machine according to claim 17,
wherein the display device is configured to display the maximum output before changed and the maximum output after changed.

19. The working machine according to claim 17 or 18,
wherein the display device is configured to display, after the change-operation member is operated, whether the output is allowed to be changed.

20. The working machine according to claim 19,
wherein the display device is configured to display guide of a condition to change the output, when the output is not allowed to be changed.

21. The working machine according to any one of claims 1 to 20,
wherein the display device is configured to display a cost generated by the change of the output.
